# EUROPEAN PATENT APPLICATION

(11) **EP 4 614 006 A1**
(43) Date of publication of application: **10.09.2025**
(21) Application number: 23914669.9
(22) Date of filing: 05.01.2023
(51) Int. Cl.: F04D 29/70, F04B 39/16

(54) **COMPRESSION SYSTEM, METHOD FOR STARTING UP COMPRESSION SYSTEM, AND METHOD FOR STOPPING COMPRESSION SYSTEM**

(71) Applicant: Mitsubishi Heavy Industries, Ltd., Tokyo 100-8332 (JP)
(72) Inventor: OTANI, Akihito, Yokohama-shi, Kanagawa 220-0012 (JP); MIYAMOTO, Osamu, Yokohama-shi, Kanagawa 220-8401 (JP)
(74) Representative: Studio Torta S.p.A.
(86) International application number: PCT/JP2023/000065
(87) International publication number: WO 2024/147177

(57) **Abstract**

This compression system comprises: a supply line which supplies a raw material gas; a first compression part which compresses the raw material gas that flows through the supply line; an impurity removal part which removes an impurity from the raw material gas that has been compressed by the first compression part; a second compression part which further compresses the raw material gas that has passed through the impurity removal part; a discharge line which guides the raw material gas that has been compressed by the second compression part to the outside; an upstream side shutoff valve and downstream side shutoff valve which are respectively provided at a stage prior to and a stage after the impurity removal part so as to sandwich the impurity removal part, and the flow rate of at least one of which is adjustable; a gas addition line which can introduce compressed gas between the downstream side shutoff valve and the second compression part; and an open/close valve which is provided to the discharge line.

## Description

### Technical Field

The present disclosure relates to a compression system, a method for starting up a compression system, and a method for stopping a compression system.

### Background Art

For example, as shown in PTLs 1 and 2 below, a system for compressing and storing carbon dioxide has been practically used in recent years. In this type of system, measures are taken to remove impurities contained in carbon dioxide as a raw material gas. Specifically, a device that removes oxygen as an impurity from a raw material gas by generating water by causing oxygen and hydrogen to react with each other and a device that removes the water are mainly used.

### Citation List

### Patent Literature

[PTL 2] U.S. Patent No. 10385861
[PTL 1] Japanese Unexamined Patent Application Publication No. 6188125

### Summary of Invention

### Technical Problem

For example, a device that removes oxygen using a catalytic reaction is mainstream, and many devices are less likely to be affected by pressure fluctuations. On the other hand, in order to remove water, a substance such as a hydrophilic gel is used. When such a substance is exposed to sudden pressure fluctuations in the surrounding environment, the substance may be physically or chemically damaged and may not exhibit original performance. For this reason, there has been an increasing demand for a compression system that can be smoothly operated while avoiding the influence of pressure fluctuations.

The present disclosure has been made to solve the above-described problems, and an object of the present disclosure is to provide a compression system, a method for starting up a compression system, and a method for stopping a compression system, in which it is possible to smoothly operate the compression system while avoiding the influence of pressure fluctuations.

### Solution to Problem

In order to solve the above problems, a compression system according to the present disclosure includes a supply line to which raw material gas is supplied, a first compression part that compresses the raw material gas flowing through the supply line, an impurity removal part that removes an impurity from the raw material gas compressed by the first compression part, a second compression part that further compresses the raw material gas that has passed through the impurity removal part, a discharge line that guides the raw material gas compressed by the second compression part to the outside, an upstream side shutoff valve and a downstream side shutoff valve that are respectively provided at a front stage and a rear stage of the impurity removal part to sandwich the impurity removal part therebetween, and a flow rate of at least one of which is adjustable, a gas addition line capable of guiding compressed gas between the downstream side shutoff valve and the second compression part, and an open/close valve provided in the discharge line.

A method for starting up a compression system according to the present disclosure is the method for starting up a compression system described above, the method including a step of closing the upstream side shutoff valve and the downstream side shutoff valve, a step of causing the raw material gas to flow through the supply line, a step of starting up the first compression part, a step of starting up the second compression part, a step of guiding the raw material gas to the impurity removal part in a state where a predetermined pressure fluctuation speed is maintained by adjusting an opening degree of one side in which the flow rate is adjustable in a direction in which the opening degree increases while opening the upstream side shutoff valve, a step of opening the downstream side shutoff valve when a pressure of the impurity removal part exceeds a predetermined reference value, and a step of opening the open/close valve provided in the discharge line.

A method for stopping a compression system according to the present disclosure is the method for stopping a compression system described above, the method including a step of closing the upstream side shutoff valve, the downstream side shutoff valve, and the open/close valve, and a step of stopping the first compression part and the second compression part.

### Advantageous Effects of Invention

According to the present disclosure, it is possible to provide a compression system, a method for starting up a compression system, and a method for stopping a compression system that can be smoothly operated while avoiding the influence of pressure fluctuations.

### Brief Description of Drawings

Fig. 1 is a system diagram showing a configuration of a compression system according to an embodiment of the present disclosure.
Fig. 2 is a system diagram showing a state of each device in step S1 when the compression system is activated.
Fig. 3 is a system diagram showing a state of each device in step S2 when the compression system is activated.
Fig. 4 is a system diagram showing a state of each device in steps S3 and S4 when the compression system is activated.
Fig. 5 is a system diagram showing a state of each device in step S5 when the compression system is activated.
Fig. 6 is a system diagram showing a state of each device in step S6 when the compression system is activated.
Fig. 7 is a system diagram showing a state of each device in step S7 when the compression system is activated.
Fig. 8 is a system diagram showing a state of each device in step S11 when the compression system is stopped.
Fig. 9 is a system diagram showing a state of each device in step S12 when the compression system is stopped.
Fig. 10 is a system diagram showing a state of each device after step S12 when the compression system is stopped.
Fig. 11 is a flowchart showing each step of a method for starting up the compression system.
Fig. 12 is a flowchart showing each step of a method for stopping the compression system.
Fig. 13 is an enlarged view of main parts showing a modification example of the compression system according to the embodiment of the present disclosure.
Fig. 14 is an enlarged view of main parts showing another modification example of the compression system according to the embodiment of the present disclosure.

### Description of Embodiments

### (Configuration of Compression System)

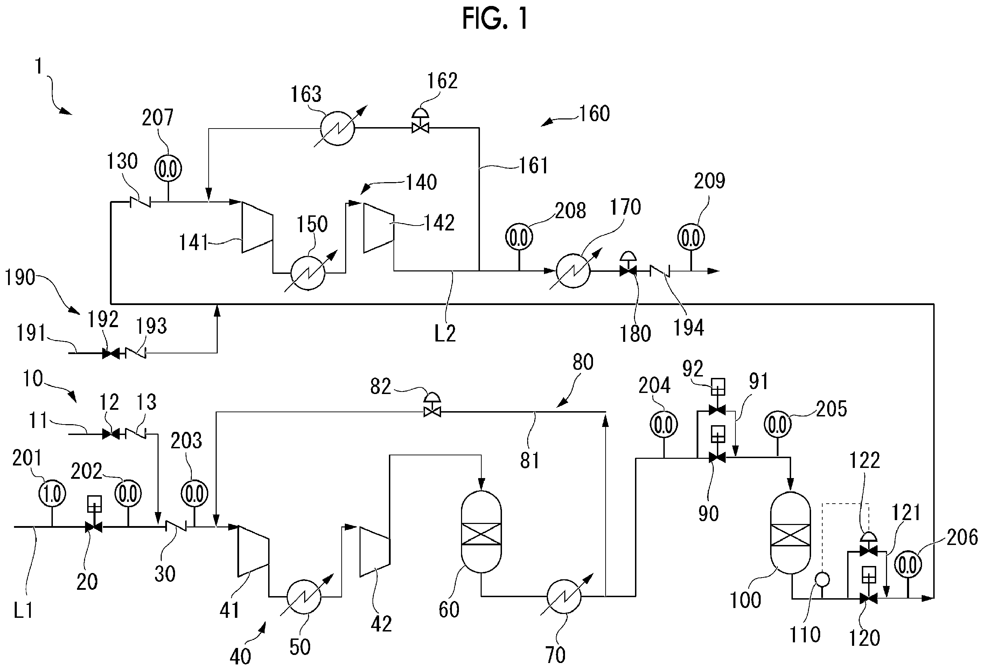

Hereinafter, a compression system 1, a method for starting up the compression system 1, and a method for stopping the compression system 1 according to a first embodiment of the present disclosure will be described with reference to Figs. 1 to 12. The compression system 1 is used, for example, to compress carbon dioxide. In the drawings referred to in the following description, a valve device that is shaded in black indicates that the valve device is in a closed state, and a valve device that is shaded in white indicates that the valve device is in an open state.

As shown in Fig. 1, the compression system 1 includes a supply line L1, a pressurizing part 10, a first open/close valve 20, a first check valve 30, a first compression part 40, a first cooler 50, a first impurity removal part 60, a second cooler 70, a first recycling part 80, an upstream side shutoff valve 90, an upstream side bypass line 91, an auxiliary shutoff valve 92, a second impurity removal part 100 (impurity removal part), a fluctuation rate acquisition part 110, a downstream side shutoff valve 120, a downstream side bypass line 121, a flow regulation valve 122, a second check valve 130, a second compression part 140, a discharge line L2, a third cooler 150, a second recycling part 160, a fourth cooler 170, a second open/close valve 180 (open/close valve), and a gas addition part 190.

Carbon dioxide as a raw material gas is supplied to the supply line L1 from an external tank or the like. In the following description, a side to which the raw material gas flows in the supply line L1 is referred to as an "upstream side", and an opposite side is referred to as a "downstream side". On the supply line L1, the first open/close valve 20, the pressurizing part 10, the first check valve 30, the first compression part 40, the first cooler 50, the first impurity removal part 60, the second cooler 70, the first recycling part 80, the upstream side shutoff valve 90, the second impurity removal part 100, the downstream side shutoff valve 120, the second check valve 130, and the second compression part 140 are disposed in this order from the upstream side to the downstream side.

The first open/close valve 20 is a valve for switching a flow state of the supply line L1. The pressurizing part 10 is a device for increasing the pressure of the supply line L1 and each device on the supply line L1 to the same level as the pressure of the raw material gas. Specifically, the pressurizing part 10 includes a pressurizing line 11 through which a compressed gas flows, and a first shutoff valve 12 and a fourth check valve 13 provided on the pressurizing line 11. One end of the pressurizing line 11 is connected to a tank or a compression device in which a compressed gas is stored. The other end of the pressurizing line 11 is connected between the first open/close valve 20 and the first check valve 30 on the supply line L1. The first shutoff valve 12 is a valve device that switches the flow state of the pressurizing line 11. The fourth check valve 13 allows the compressed gas in the pressurizing line 11 to flow only in a direction toward the supply line L1 side. Similarly, the first check valve 30 provided on the supply line L1 also allows the raw material gas in the supply line L1 to flow only in a direction from the upstream side to the downstream side.

The first compression part 40 includes a first low-pressure compressor 41 and a first high-pressure compressor 42. An outlet-side end portion of the first low-pressure compressor 41 is connected to an inlet side of the first high-pressure compressor 42. The first low-pressure compressor 41 and the first high-pressure compressor 42 are, for example, a centrifugal compressor or an axial compressor. Accordingly, it is possible to compress the raw material gas. Further, a first cooler 50 is provided between the first low-pressure compressor 41 and the first high-pressure compressor 42. The first cooler 50 is a heat exchanger that performs heat exchange between the refrigerant supplied from the outside and the raw material gas. Low-temperature air or a liquid refrigerant is used as the refrigerant.

The first impurity removal part 60 is a device for removing oxygen as an impurity contained in the raw material gas flowing out from the first compression part 40. For example, an example is considered in which the oxygen concentration in the raw material gas is lowered by reacting oxygen with hydrogen through a catalytic reaction to form water. The second cooler 70 is a heat exchanger for lowering the temperature of the raw material gas by exchanging heat with the refrigerant, as in the other cooler described above.

The first recycling part 80 includes a first recycling line 81 and a first expansion valve 82. The first recycling line 81 connects between the second cooler 70 and the upstream side shutoff valve 90 on the supply line L1 and between the first check valve 30 and the first compression part 40. A first expansion valve 82 is provided on the first recycling line 81. As will be described in detail later, the first recycling part 80 is provided to circulate the raw material gas between the first compression part 40 and the first impurity removal part 60 and to operate the compression system 1 in a circulation operation.

The upstream side shutoff valve 90 is provided between the first impurity removal part 60 and the second impurity removal part 100 on the supply line L1. The upstream side shutoff valve 90 is a valve that can be switched between an open state and a closed state. That is, the upstream side shutoff valve 90 does not have a flow regulation function. Further, an upstream side bypass line 91 is provided to bypass the upstream side shutoff valve 90. One end side of the upstream side bypass line 91 is connected to the upstream side of the upstream side shutoff valve 90, and the other end is connected to the downstream side of the upstream side shutoff valve 90. An auxiliary shutoff valve 92 is provided on the upstream side bypass line 91. The upstream side bypass line 91 and the auxiliary shutoff valve 92 are set to have a smaller flow path cross-sectional area than the supply line L1 and the upstream side shutoff valve 90.

The second impurity removal part 100 is provided between the upstream side shutoff valve 90 and the downstream side shutoff valve 120. The second impurity removal part 100 is a device for removing water originally contained in the raw material gas or water generated in the first impurity removal part 60 described above from the raw material gas. Specifically, the raw material gas containing moisture is brought into contact with a highly hydrophilic gel or pellet, so that the gel or pellet absorbs the moisture. It is known that the gel or the pellet used for this type of dehydration is physically or chemically damaged when exposed to a sudden pressure fluctuation. Therefore, as will be described in detail later, when the internal pressure of the second impurity removal part 100 is increased, it is necessary to control the pressure fluctuation speed (pressure fluctuation rate). For this reason, a fluctuation rate acquisition part 110 for acquiring a fluctuation rate of the pressure of the raw material gas is provided on the downstream side of the second impurity removal part 100. The fluctuation rate acquisition part 110 acquires the pressure fluctuation rate of the raw material gas, and then compares the pressure fluctuation rate with a reference value to generate a drive signal for controlling the opening degree of the flow regulation valve 122 (to be described later).

The downstream side shutoff valve 120 is a valve that can be switched between opening and closing, as in the upstream side shutoff valve 90. That is, the downstream side shutoff valve 120 does not have a flow regulation function. Further, a downstream side bypass line 121 is provided to bypass the downstream side shutoff valve 120. One end side of the downstream side bypass line 121 is connected to the upstream side of the downstream side shutoff valve 120, and the other end is connected to the downstream side of the downstream side shutoff valve 120. A flow regulation valve 122 is provided on the downstream side bypass line 121. The downstream side bypass line 121 and the flow regulation valve 122 are set to have a smaller flow path cross-sectional area than the supply line L1 and the downstream side shutoff valve 120. The flow regulation valve 122 can change the flow rate of the raw material gas flowing through the downstream side bypass line 121 in a stepless manner. Further, the opening degree of the flow regulation valve 122 is subjected to feedback control or feedforward control based on the pressure fluctuation rate of the raw material gas by the fluctuation rate acquisition part 110 described above. That is, in a case where the pressure fluctuation rate is higher than the reference value, the opening degree of the flow regulation valve 122 is adjusted to be smaller. On the contrary, in a case where the pressure fluctuation rate is lower than the reference value, the opening degree of the flow regulation valve 122 is adjusted in a direction in which the opening degree is increased.

A second check valve 130 is provided on the downstream side of the downstream side shutoff valve 120. The second check valve 130, like the first check valve 30, restricts a flow direction of the raw material gas in the supply line L1 only to the direction from the upstream side to the downstream side. A gas addition part 190 is provided between the second check valve 130 and the downstream side shutoff valve 120. As will be described in detail later, the gas addition part 190 supplies a compressed gas for smoothly operating the second compression part 140 onto the supply line L1 when activating the compression system 1. Specifically, the gas addition part 190 includes a gas addition line 191, a second shutoff valve 192, and a fifth check valve 193. One end of the gas addition line 191 is connected to a compressed gas supply source, and the other end is connected between the second check valve 130 and the downstream side shutoff valve 120 on the supply line L1. The second shutoff valve 192 is a valve that switches the flow state of the gas addition line 191, as in the first shutoff valve 12 described above. The fifth check valve 193 restricts the flow direction of the compressed gas only to the direction toward the supply line L1 side.

A second compression part 140 is provided on the downstream side of the second check valve 130. The second compression part 140 includes a second low-pressure compressor 141 and a second high-pressure compressor 142. An outlet-side end portion of the second low-pressure compressor 141 is connected to an inlet side of the second high-pressure compressor 142. The second low-pressure compressor 141 and the second high-pressure compressor 142 are, for example, a centrifugal compressor or an axial compressor. Accordingly, it is possible to compress the raw material gas. Further, a third cooler 150 is provided between the second low-pressure compressor 141 and the second high-pressure compressor 142. The third cooler 150 is a heat exchanger that performs heat exchange between the refrigerant supplied from the outside and the raw material gas. Low-temperature air or a liquid refrigerant is used as the refrigerant.

A discharge line L2 is connected to a downstream side of the second compression part 140. The discharge line L2 is a flow path for guiding the raw material gas, which has become high pressure after being compressed by the first compression part 40 and the second compression part 140, to the outside. A fourth cooler 170 is provided on the downstream side of the second compression part 140 on the discharge line L2. The fourth cooler 170 is a heat exchanger that performs heat exchange between the refrigerant supplied from the outside and the raw material gas, as in the third cooler 150. Low-temperature air or a liquid refrigerant is used as the refrigerant. A second recycling part 160 is provided between the fourth cooler 170 and the second compression part 140. The second recycling part 160 includes a second recycling line 161, a second expansion valve 162, and a fifth cooler 163. The second recycling line 161 connects between the fourth cooler 170 and the second compression part 140 on the discharge line L2 and between the second check valve 130 and the second compression part 140. The second expansion valve 162 and the fifth cooler 163 are provided on the second recycling line 161. As will be described in detail later, the second recycling part 160 is provided to circulate the raw material gas inside the second compression part 140 and operate the compression system 1 in a circulation operation.

A second open/close valve 180 is provided on the downstream side of the fourth cooler 170. The second open/close valve 180 is a valve for switching a flow state of the raw material gas circulating through the discharge line L2. It is also possible to use a valve having a flow regulation function as the second open/close valve 180. Further, a third check valve 194 is provided on the downstream side of the second open/close valve 180. The third check valve 194 restricts the circulation direction of the raw material gas only to a direction from the upstream side to the downstream side.

### (Method for Starting Up Compression System)

Next, a method for starting up the compression system 1 described above will be described with reference to Figs. 1 to 7 and Fig. 11. In each of the drawings referred to in the following description, in order to visually describe the pressure state of each part of the compression system 1, the pressure state at the nine positions from the first measuring part 201 to the ninth measuring part 209 is indicated by a number surrounded by a circle. The unit of the number is, for example, bar. Specifically, the first measuring part 201 is provided on the supply line L1. The second measuring part 202 is provided between the first open/close valve 20 and the pressurizing line 11. The third measuring part 203 is provided between the first check valve 30 and the first compression part 40. The fourth measuring part 204 is provided between the second cooler 70 and the upstream side shutoff valve 90. The fifth measuring part 205 is provided between the upstream side shutoff valve 90 and the second impurity removal part 100. The sixth measuring part 206 is provided between the downstream side shutoff valve 120 and the second check valve 130. The seventh measuring part 207 is provided between the second check valve 130 and the second compression part 140. The eighth measuring part 208 is provided between the second compression part 140 and the fourth cooler 170. The ninth measuring part 209 is provided on the downstream side of the third check valve. In addition, the numbers shown in each measuring part are not absolute values, but indicate a relative magnitude relationship between the pressures of the units. That is, various absolute values can be obtained depending on the design and specifications.

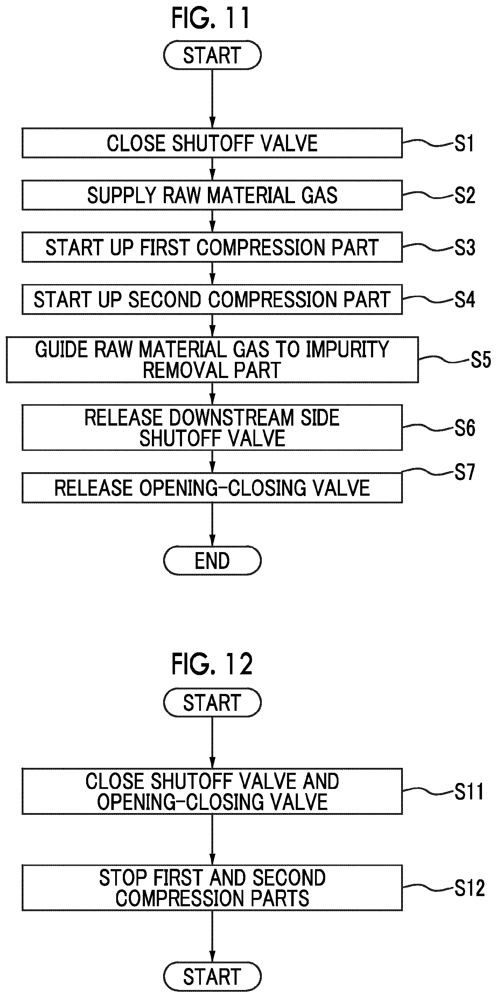

First, as shown in Fig. 11, the method for starting up includes step S1 of closing the upstream side shutoff valve 90 and the downstream side shutoff valve 120, step S2 of supplying the raw material gas to the supply line L1, step S3 of starting the first compression part 40, step S4 of starting the second compression part 140, step S5 of guiding the raw material gas into the second impurity removal part 100, step S6 of opening the downstream side shutoff valve 120, and Step S7 of opening the second open/close valve 180.

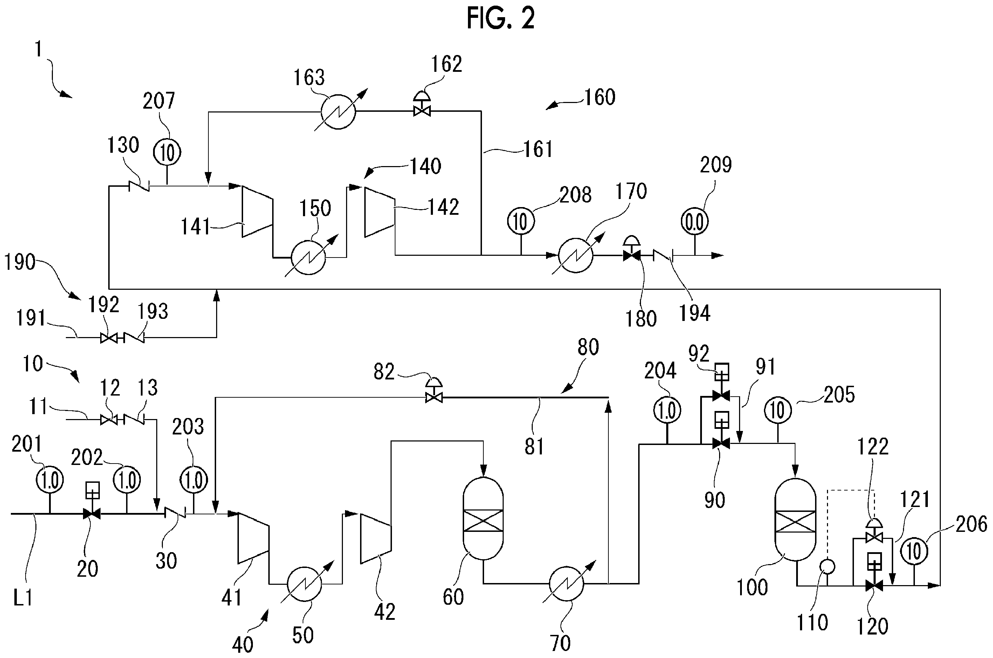

In step S1, the compression system 1 is transitioned from the state of Fig. 1, which is the initial state, to the state of Fig. 2. Specifically, in the initial state, all the valve devices except for the first expansion valve 82 and the second expansion valve 162 are in a closed state. In addition, at this time, in all the measuring parts except for the first measuring part 201, the pressure state is lower than the pressure of the raw material gas. In the state of Fig. 2, the first shutoff valve 12 is open. Accordingly, the compressed gas is supplied to a section from the first open/close valve 20 to the upstream side shutoff valve 90 on the supply line L1, and the pressure of the second to fourth measuring parts 204 becomes 1.0, which is the same as the pressure of the raw material gas. In addition, the second shutoff valve 192 and the flow regulation valve 122 are also opened, so that the compressed gas is supplied onto the supply line L1 through the gas addition line 191. Accordingly, the pressure becomes the pressure 10 in the fifth to seventh measuring parts 207. That is, the pressure of the compressed gas supplied from the gas addition line 191 is higher than the pressure of the compressed gas supplied from the pressurizing line 11. In addition, at this time, the flow rate of the compressed gas supplied to the second impurity removal part 100 is controlled by the flow regulation valve 122. Specifically, as described above, the opening degree of the flow regulation valve 122 is controlled such that the pressure fluctuation rate of the second impurity removal part 100 does not exceed the reference value. In addition, in this case, the pressure of the second impurity removal part 100 may not be set to 0 to 10 by opening the flow regulation valve 122 in step S1, and the pressure of the second impurity removal part 100 may be set to 0 to a target pressure in step S5 to be described later.

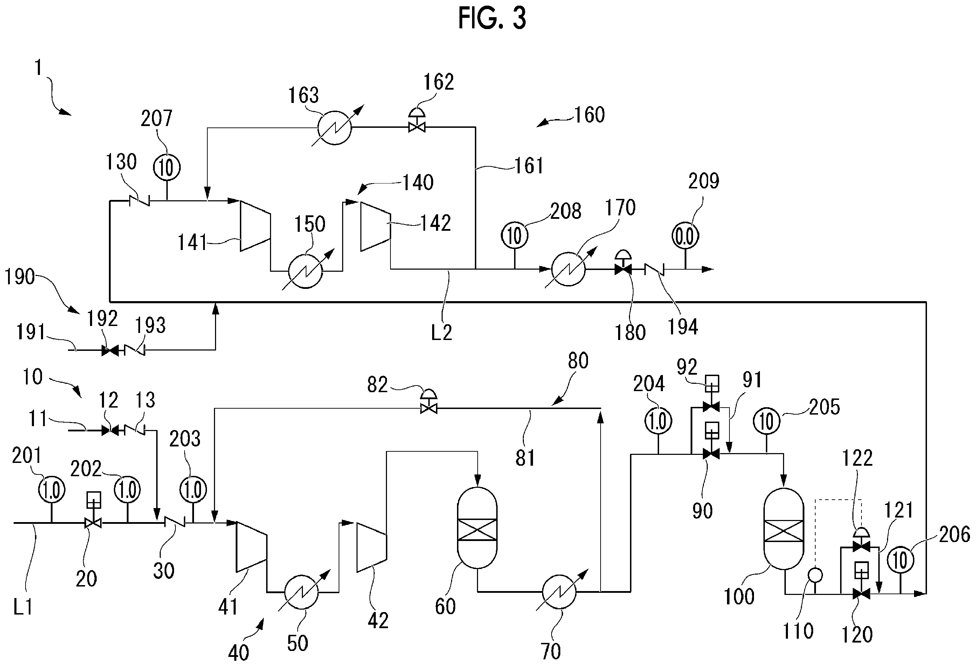

From the above state, in step S2, the flow regulation valve 122 is closed and the first open/close valve 20 is opened (Fig. 3). In addition, in this case, the first shutoff valve 12 and the second shutoff valve 192 are closed to stop the supply of the compressed gas. In this manner, the raw material gas is in a state of flowing in a section on the upstream side of the upstream side shutoff valve 90 in the supply line L1. By closing the flow regulation valve 122, the pressure of the second impurity removal part 100 is maintained at the state (pressure 10) in step S1. In addition, the state of step S1 (pressure 10) is maintained even in a section between the downstream side shutoff valve 120 and the second open/close valve 180.

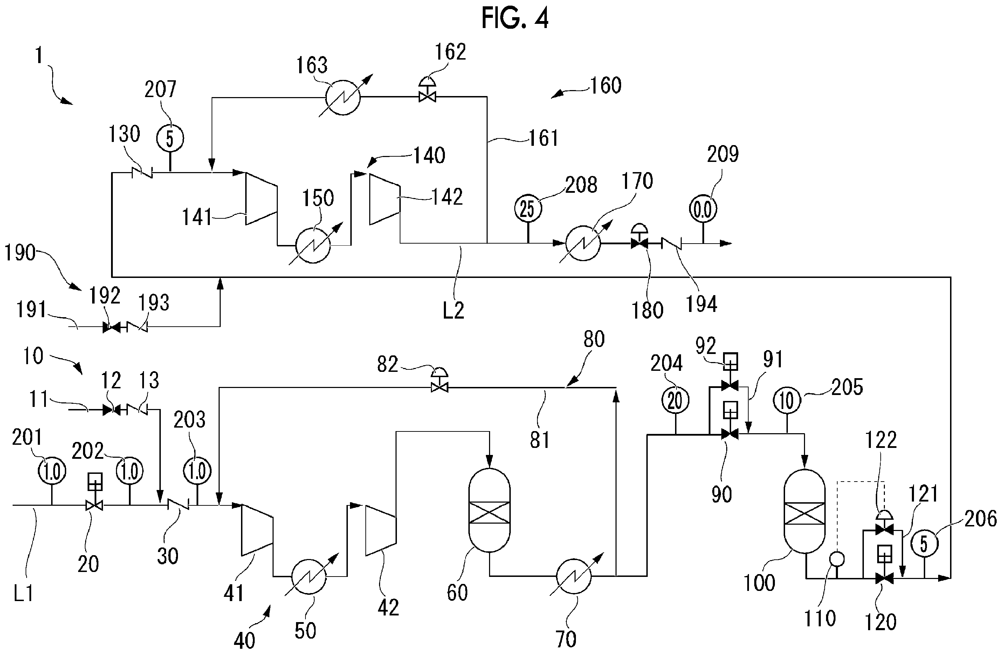

In subsequent step S3, the first compression part 40 is activated in the above state. Further, the second compression part 140 is activated in step S4. Then, as shown in Fig. 4, the pressure of the fourth measuring part 204 on the downstream side of the first compression part 40 increases to 20. Further, by activating the second compression part 140, the pressure in the section from the downstream side shutoff valve 120 to the second compression part 140 (that is, the section on the upstream side of the second compression part 140) drops to 5, and the pressure on the discharge line L2 (that is, the pressure on the downstream side of the second compression part 140) rises to 25.

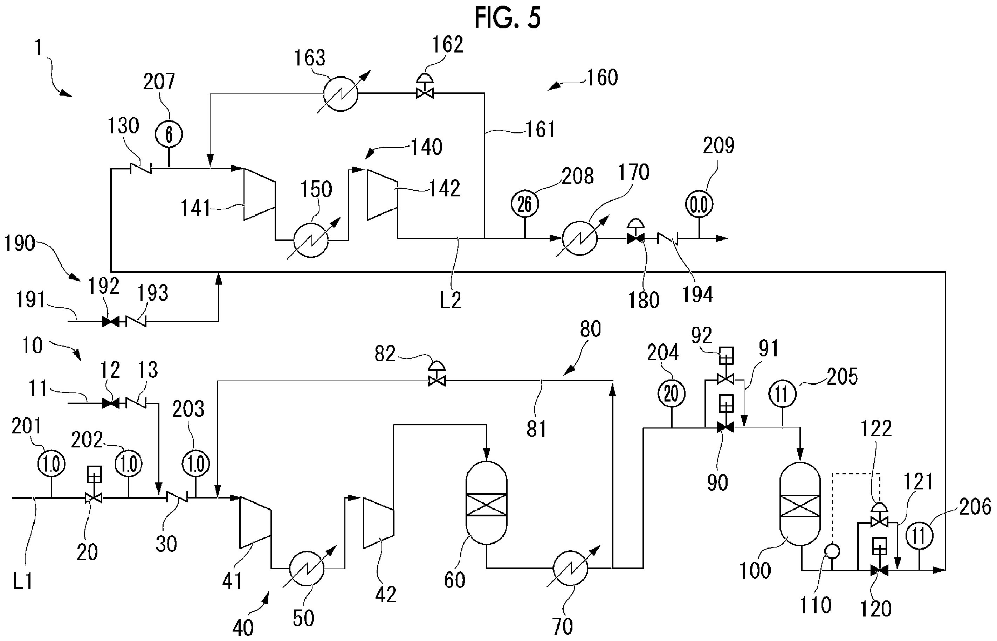

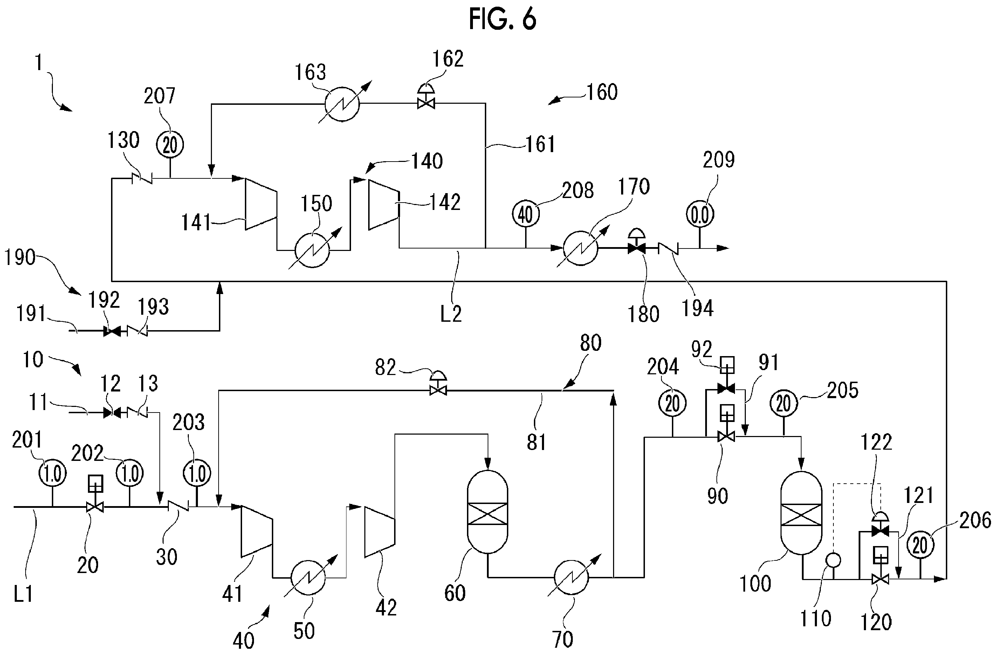

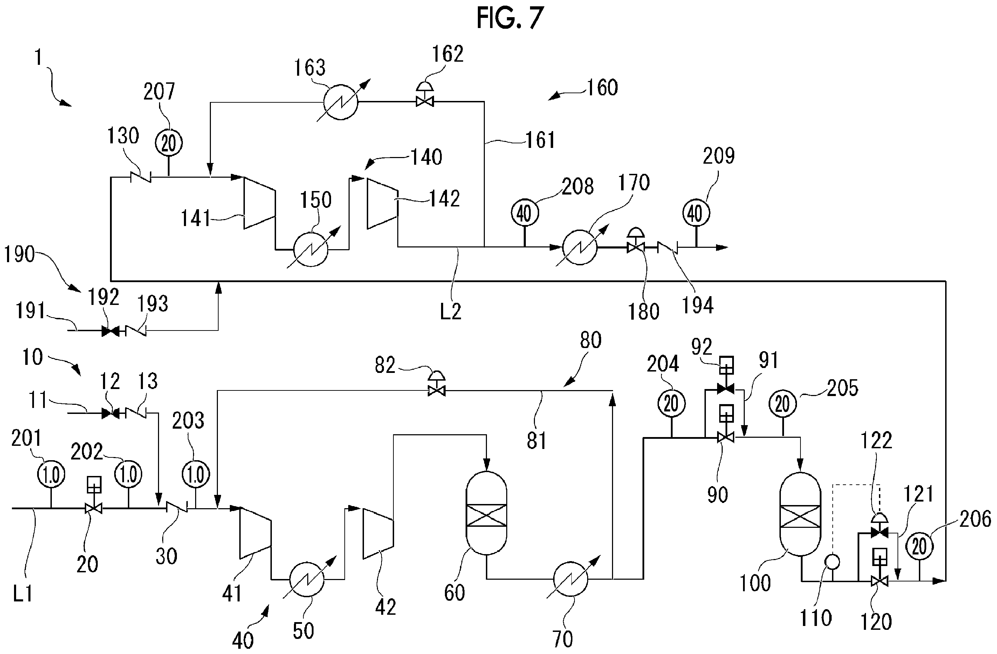

Next, in step S5, the auxiliary shutoff valve 92 is opened, and the opening degree of the flow regulation valve 122 is adjusted in the direction of increasing the opening degree from the above state (Fig. 5). As a result, the raw material gas compressed by the first compression part 40 is slightly guided into the second impurity removal part 100 through the shutoff valve. In this case, the opening degree of the flow regulation valve 122 is controlled to maintain a state where the pressure fluctuation rate (pressure fluctuation speed) of the second impurity removal part 100 does not exceed a predetermined reference value. Thereafter, when the pressure of the second impurity removal part 100 reaches a predetermined value, the auxiliary shutoff valve 92 is closed and the upstream side shutoff valve 90 is opened. In addition, the flow regulation valve 122 is closed and the downstream side shutoff valve 120 is opened (Fig. 6: step S6). Finally, in step S7, the second open/close valve 180 is opened to guide the raw material gas, which is compressed and has become high pressure, to the outside (Fig. 7). As described above, all steps relating to the method for starting up the compression system 1 are completed. After the compressor is started up, the first expansion valve 82 and the second expansion valve 162 are closed, and the discharge amount of the raw material gas, which is compressed and has a high pressure, is set to the rated value.

### (Compression System Stopping Method)

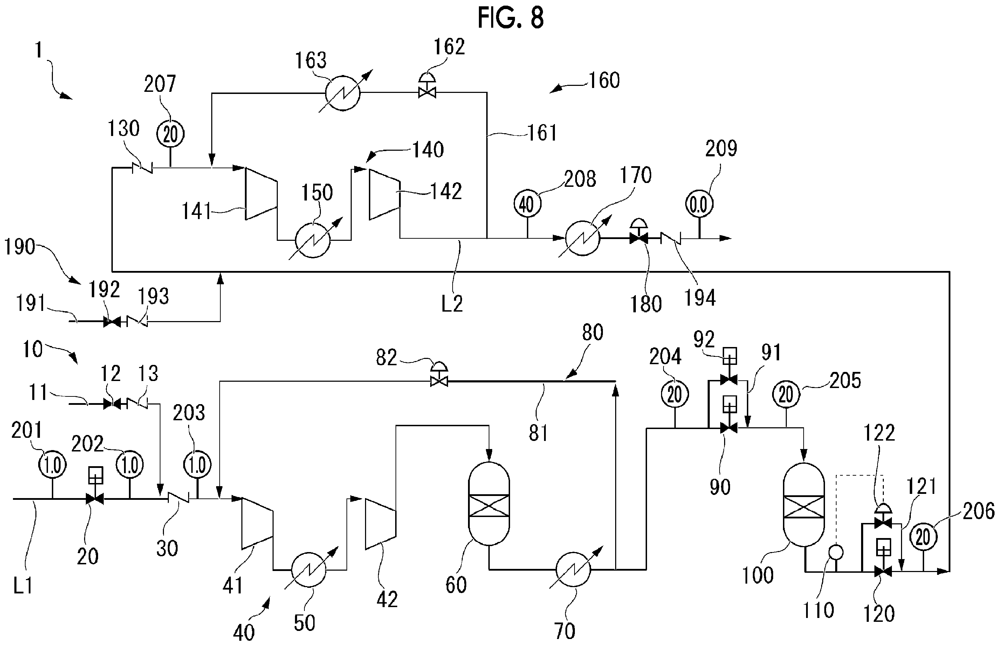

Next, a method for stopping the compression system 1 will be described with reference to Figs. 8 to 10 and 12. As shown in Fig. 12, the stopping method includes step S11 of opening the first expansion valve 82 and the second expansion valve 162 and closing the first open/close valve 20, the upstream side shutoff valve 90, the auxiliary shutoff valve 92, the downstream side shutoff valve 120, the flow regulation valve 122, and the second open/close valve 180, and step S12 of stopping the first compression part 40 and the second compression part 140.

In step S11, the first expansion valve 82 and the second expansion valve 162 are opened, and the first open/close valve 20, the upstream side shutoff valve 90, the auxiliary shutoff valve 92, the downstream side shutoff valve 120, the flow regulation valve 122, and the second open/close valve 180 are closed, so that the second impurity removal part 100 is disconnected from the other section as shown in Fig. 8. That is, the fifth measuring part 205 indicates a state where the pressure 20 is maintained during the operation. In addition, the supply of the raw material gas is stopped by closing the first open/close valve 20. Similarly, the discharge of the high-pressure raw material gas to the outside is stopped by closing the second open/close valve 180.

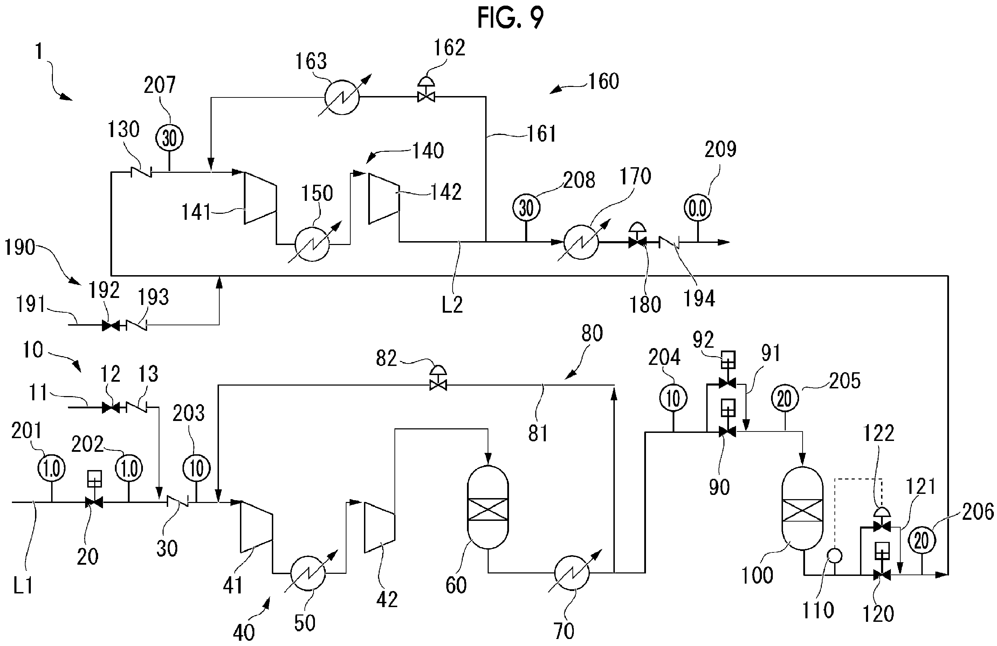

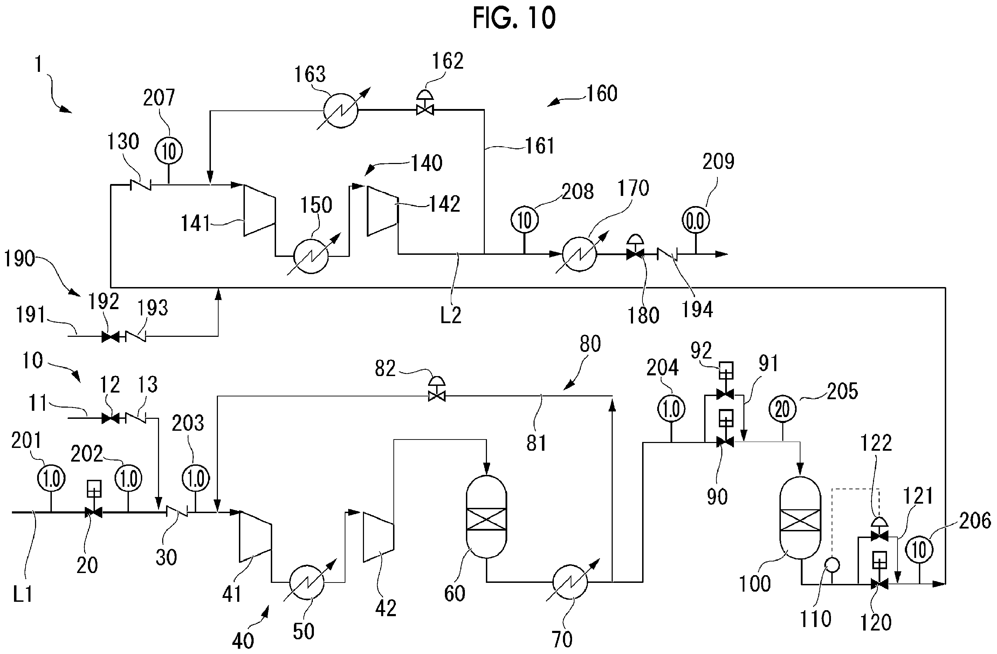

When the first compression part 40 is continuously operated in this state, the raw material gas is circulated via the first recycling part 80. At this time, the raw material gas is released through the first expansion valve 82 of the first recycling part 80, so that the pressure of the raw material gas is reduced. Similarly, by continuing to operate the second compression part 140, the raw material gas is circulated via the second recycling part 160. In this case, the raw material gas is released through the second expansion valve 162 of the second recycling part 160, so that the pressure of the raw material gas is lowered (Fig. 8). Finally, in step S12, the operation of the first compression part 40 and the second compression part 140 is stopped (Fig. 9). In this manner, all steps relating to the method for stopping the compression system 1 are completed. In a case where the pressure of the first compression part 40 and the second compression part 140 is higher than the pressure region in which the first compression part 40 and the second compression part 140 are restartable after the stoppage, the pressure of the first compression part 40 and the second compression part 140 may be naturally or artificially reduced until the pressure reaches a pressure required for the reactivation of the first compression part 40 and the second compression part 140 (Fig. 10).

### (Effects of Action)

Here, a device that removes oxygen, such as the first impurity removal part 60, is mainly a device that uses a catalytic reaction, and many devices are less likely to be affected by pressure fluctuations. On the other hand, in order to remove the water, a substance such as a hydrophilic gel is used as in the second impurity removal part 100 described above. When such a substance is exposed to sudden pressure fluctuations in the surrounding environment, the substance may be physically or chemically damaged and may not exhibit original performance. For this reason, there has been an increasing demand for a compression system 1 that can be smoothly operated while avoiding the influence of pressure fluctuations. Furthermore, there is also an operational problem in that it takes a long time to start the compression system 1 in order to avoid the above-described sudden pressure fluctuations. Therefore, in the present embodiment, each of the above-described configurations and methods is adopted.

According to the above-described configuration, the upstream side shutoff valve 90 and the downstream side shutoff valve 120 are respectively provided at the front stage and the rear stage of the second impurity removal part 100, and the flow regulation valve 122 capable of adjusting the flow rate is provided in at least one of the upstream side shutoff valve 90 and the downstream side shutoff valve 120. By controlling the opening degree of the flow regulation valve 122, the supply of the raw material gas to the second impurity removal part 100 can be performed for a long time. Therefore, the pressure fluctuation of the impurity removal part is slowed down, and it is possible to avoid degradation of substances or members required for removal of water such as gel or pellets inside the impurity removal part. Further, since the gas addition line 191 is provided on the upstream side of the second compression part 140, it is possible to fill the second compression part 140 with the amount of the compressed gas required to activate the second compression part 140 in advance even in a state where the second compression part 140 is shut off from the supply line L1 on the upstream side. On the contrary, in a case where the downstream side shutoff valve 120 is closed in a configuration where the gas addition line 191 is not provided, the raw material gas is not supplied to the second compression part 140 from the supply line L1, and thus there is a possibility that the second compression part 140 may cause a surge. According to the above-described configuration, the possibility is significantly reduced, and the compression system 1 can be stably started up and operated.

Further, according to the above-described configuration, since the flow regulation valve 122 provided in the upstream side bypass line 91 or the downstream side bypass line 121 is provided, it is possible to more precisely regulate the flow rate of the raw material gas, for example, compared to a case where the flow regulation function is provided in the upstream side shutoff valve 90 or the downstream side shutoff valve 120 itself. In particular, the upstream side bypass line 91 and the downstream side bypass line 121 have a flow path cross-sectional area smaller than that of the supply line L1. That is, only the raw material gas having a smaller flow rate than that of the supply line L1 flows through the upstream side bypass line 91 and the downstream side bypass line 121. In this manner, the pressure fluctuation rate of the impurity removal part can be more accurately controlled.

In addition, according to the above-described configuration, the pressure in the supply line L1 can be increased to the same level as the pressure of the raw material gas by supplying the compressed gas to the supply line L1 through the pressurizing line 11. In this manner, it is possible to avoid damage to the components due to the high-pressure gas being rapidly supplied to the first compression part 40. In particular, the impeller of the compressor serving as the first compression part 40 is generally formed in a thin plate shape, and there is a concern that the impeller may be damaged when suddenly exposed to the high-pressure fluid. According to the above-described configuration, it is possible to reduce such a risk and to stably and smoothly operate the compression system 1.

In addition, according to the above-described configuration, when the compression system 1 is operated in a circulation manner, the first compression part 40 can be shut off from the other system, and the circulation operation through the first recycling line 81 can be performed. In this case, the pressure of the gas is reduced through the first expansion valve 82. Similarly, the second compression part 140 can be shut off from the other system, and the circulation operation through the second recycling line 161 can be performed. In this case, the pressure of the gas is reduced through the second expansion valve 162. In this manner, the compression system 1 can be operated in a circulation manner.

Further, according to the above-described configuration, while the pressure fluctuation rate of the second impurity removal part 100 is acquired by the fluctuation rate acquisition part 110, the opening degree of the flow regulation valve 122 provided in parallel with at least one of the upstream side shutoff valve 90 and the downstream side shutoff valve 120 can be autonomously adjusted based on the fluctuation rate. Accordingly, for example, the pressure fluctuation rate of the second impurity removal part 100 can be stably and accurately maintained as compared with a case where the management is performed by personnel.

In addition, according to the above method, the upstream side shutoff valve 90 and the downstream side shutoff valve 120 are closed first, so that the pressure of the impurity removal part can be maintained in a state during the operation. In this state, the first compression part 40 and the second compression part 140 are stopped, so that the compression system 1 is stopped while the pressure of the second impurity removal part 100 is maintained. On the other hand, when the restart is performed, since the pressure of the impurity removal part is maintained in a state during the operation, it is not necessary to pressurize the second impurity removal part 100 again, and the time required for the activation can be significantly shortened. In particular, as described above, since the second impurity removal part 100 has a limit on the pressure fluctuation rate, it takes a long time to perform the re-pressurization. However, in the above method, such a drawback is eliminated, and the compression system 1 can be stably restarted in a short time.

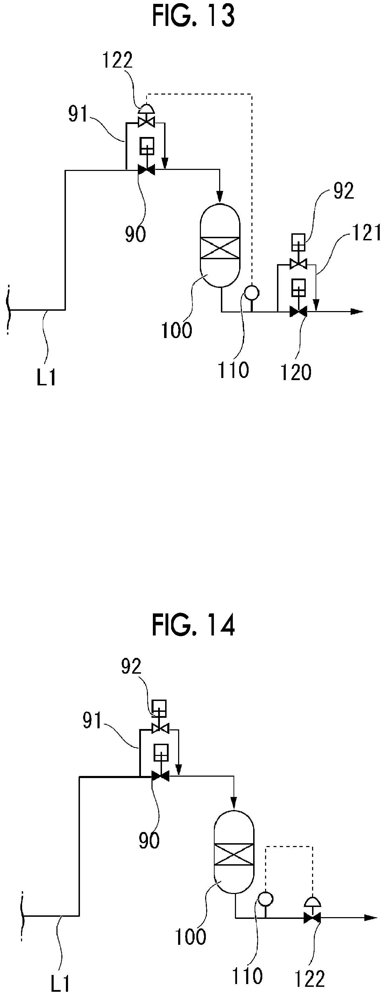

The embodiment of the present disclosure has been described above. Various changes or improvements can be made to the above configuration without departing from the concept of the present disclosure. For example, as shown in a modification example in Fig. 13, it is also possible to provide the flow regulation valve 122 on the upstream side bypass line 91 and to provide the auxiliary shutoff valve 92 on the downstream side bypass line 121. Further, as shown in Fig. 14 as another modification example, the downstream side shutoff valve 120 itself or the upstream side shutoff valve 90 itself can be replaced with the flow regulation valve 122. In any of the configurations, the same actions and effects as those described above can be obtained. In addition, the disposition and the number of the cooler and the check valve described above are examples, and can be appropriately changed according to design and specifications. In addition, when the raw material gas is supplied at an atmospheric pressure, the pressurizing line 11 described above can be omitted. Furthermore, the number of stages of the compressors included in the first compression part 40 and the second compression part 140 is also an example, and may be a single stage or three or more stages. Furthermore, the installation of the first impurity removal part 60 is also an example, and can be appropriately changed according to the specification of the generated gas. In addition, the first recycling line 81 is usually installed between the first high-pressure compressor 42 and the second check valve 130 on the supply line L1, and in the example of Fig. 1, the first recycling line 81 connects the second cooler 70 and the upstream side shutoff valve 90 on the supply line L1, and the first check valve 30 and the first compression part 40. In addition, the second recycling line 161 is usually installed between the second high-pressure compressor 142 and the second open/close valve 180 on the discharge line L2, and in the example of Fig. 1, the second recycling line 161 connects between the fourth cooler 170 and the second compression part 140 on the discharge line L2 and between the second check valve 130 and the second compression part 140. The gas addition line 191 is installed between the upstream side shutoff valve 90 and the second open/close valve 180, and in the example of Fig. 1, is installed between the downstream side shutoff valve 120 and the second compression part 140.

### <Additional Notes>

The compression system 1, the method for starting up the compression system 1, and the method for stopping the compression system 1 described in each embodiment are understood as follows, for example.
(1) A compression system 1 according to a first aspect includes a supply line L1 to which raw material gas is supplied; a first compression part 40 that compresses the raw material gas flowing through the supply line L1; an impurity removal part that removes an impurity from the raw material gas compressed by the first compression part 40; a second compression part 140 that further compresses the raw material gas that has passed through the impurity removal part; a discharge line L2 that guides the raw material gas compressed by the second compression part 140 to the outside; an upstream side shutoff valve 90 and a downstream side shutoff valve 120 that are respectively provided at a front stage and a rear stage of the impurity removal part to sandwich the impurity removal part therebetween, and of which a flow rate of at least one is adjustable; a gas addition line 191 capable of guiding compressed gas between the downstream side shutoff valve 120 and the second compression part 140; and an open/close valve provided in the discharge line L2.
   According to the above-described configuration, the upstream side shutoff valve 90 and the downstream side shutoff valve 120 are respectively provided at the front stage and the rear stage of the impurity removal part, and of which a flow rate of at least one is adjustable. In this manner, the supply of the raw material gas to the impurity removal part can be performed for a long time. Therefore, the pressure fluctuation of the impurity removal part is slowed down, and the degradation of the substance inside the impurity removal part can be avoided. Further, since the gas addition line 191 is provided, even in a state where the second compression part 140 is shut off from the supply line L1 on the upstream side, the amount of the compressed gas required for starting up the second compression part 140 can be filled.
(2) The compression system 1 according to a second aspect is the compression system 1 of (1), further including an upstream side bypass line 91 and a downstream side bypass line 121 that respectively bypass the upstream side shutoff valve 90 and the downstream side shutoff valve 120; and a flow regulation valve 122 provided in at least one of the upstream side bypass line 91 and the downstream side bypass line 121.
   According to the above-described configuration, since the flow regulation valve 122 provided in the upstream side bypass line 91 or the downstream side bypass line 121 is provided, it is possible to more precisely regulate the flow rate of the raw material gas, for example, compared to a case where the flow regulation function is provided in the upstream side shutoff valve 90 or the downstream side shutoff valve 120 itself. In this manner, the pressure fluctuation rate of the impurity removal part can be more accurately controlled.
(3) The compression system 1 according to a third aspect is the compression system 1 of (1) or (2), further including a pressurizing line 11 capable of guiding the compressed gas to an upstream side of the first compression part 40 in the supply line L1.
   According to the above-described configuration, the pressure in the supply line L1 can be increased to the same level as the pressure of the raw material gas by supplying the compressed gas to the supply line L1 through the pressurizing line 11. In this manner, it is possible to avoid damage to the components due to the high-pressure gas being rapidly supplied to the first compression part 40.
(4) The compression system 1 according to a fourth aspect is the compression system 1 according to any one of (1) to (3), further including a first recycling line 81 that connects a downstream side and an upstream side of the first compression part 40; a first expansion valve 82 provided on the first recycling line 81; a second recycling line 161 that connects a downstream side and an upstream side of the second compression part 140; and a second expansion valve 162 provided on the second recycling line 161.
   According to the above configuration, when the compression system 1 is operated in a circulation manner, the first compression part 40 can be shut off from the other system, and the circulation operation through the first recycling line 81 can be performed. In this case, the pressure of the gas is reduced through the first expansion valve 82. Similarly, the second compression part 140 can be shut off from the other system, and the circulation operation through the second recycling line 161 can be performed. In this case, the pressure of the gas is reduced through the second expansion valve 162. In this manner, the compression system 1 can be operated in a circulation manner.
(5) The compression system 1 according to a fifth aspect is the compression system 1 according to any one of (1) to (4), further including a fluctuation rate acquisition part 110 that is provided between the impurity removal part and the downstream side shutoff valve 120, acquires a pressure fluctuation rate of the raw material gas, and is capable of adjusting an opening degree of at least one of the upstream side shutoff valve 90 and the downstream side shutoff valve 120 based on the pressure fluctuation rate.
   According to the above-described configuration, while the pressure fluctuation rate of the impurity removal part is acquired by the fluctuation rate acquisition part 110, at least one opening degree of the upstream side shutoff valve 90 and the downstream side shutoff valve 120 can be autonomously adjusted based on the fluctuation rate. In this manner, it is possible to stably maintain the pressure fluctuation rate of the impurity removal part.
(6) A method for starting up the compression system 1 according to a sixth aspect is a method for starting up the compression system 1 according to any one of the above aspects (1) to (5), the method including a step of closing the upstream side shutoff valve 90 and the downstream side shutoff valve 120; a step of causing the raw material gas to flow through the supply line L1; a step of starting up the first compression part 40; a step of starting up the second compression part 140; a step of guiding the raw material gas to the impurity removal part in a state where a predetermined pressure fluctuation speed is maintained by adjusting an opening degree of the one shutoff valve whose flow rate is adjustable in a direction in which the opening degree increases while opening the upstream side shutoff valve 90; a step of opening the downstream side shutoff valve 120 when a pressure of the impurity removal part exceeds a predetermined reference value; and a step of opening the open/close valve provided in the discharge line L2.
   According to the above method, the upstream side shutoff valve 90 and the downstream side shutoff valve 120 are respectively provided at the front stage and the rear stage of the impurity removal part, and of which a flow rate of at least one is adjustable. In this manner, the supply of the raw material gas to the impurity removal part can be performed for a long time. Therefore, the pressure fluctuation of the impurity removal part is slowed down, and the degradation of the substance inside the impurity removal part can be avoided. Further, since the gas addition line 191 is provided, even in a state where the second compression part 140 is shut off from the supply line L1 on the upstream side, the amount of the compressed gas required for starting up the second compression part 140 can be filled.
(7) A method for stopping the compression system 1 according to a seventh aspect is the method for stopping the compression system 1 according to any one of (1) to (5), the method including a step of closing the upstream side shutoff valve 90, the downstream side shutoff valve 120, and the open/close valve; and a step of stopping the first compression part 40 and the second compression part 140.

According to the above method, the upstream side shutoff valve 90 and the downstream side shutoff valve 120 are closed first, so that the pressure of the impurity removal part can be maintained in a state during the operation. In this state, the first compression part 40 and the second compression part 140 are stopped, so that the compression system 1 is stopped. On the other hand, when the restart is performed, since the pressure of the impurity removal part maintains a state during the operation, the re-pressurization is not required, and the time required for the start up can be significantly shortened.

### Industrial Applicability

In the compression system 1, the method for starting up the compression system 1, and the method for stopping the compression system 1, it is possible to operate the compression system 1 more smoothly while avoiding the influence of pressure fluctuations.

### Reference Signs List

1: compression system
10: pressurizing part
11: pressurizing line
12: first shutoff valve
13: fourth check valve
20: first open/close valve
30: first check valve
40: first compression part
41: first low-pressure compressor
42: first high-pressure compressor
50: first cooler
60: first impurity removal part
70: second cooler
80: first recycling part
81: first recycling line
82: first expansion valve
90: upstream side shutoff valve
91: upstream side bypass line
92: auxiliary shutoff valve
100: second impurity removal part
110: fluctuation rate acquisition part
120: downstream side shutoff valve
121: downstream side bypass line
122: flow regulation valve
130: second check valve
140: second compression part
141: second low-pressure compressor
142: second high-pressure compressor
150: third cooler
160: second recycling part
161: second recycling line
162: second expansion valve
163: fifth cooler
170: fourth cooler
180: second open/close valve
190: gas addition part
191: gas addition line
192: second shutoff valve
193: fifth check valve
194: third check valve
201: first measuring part
202: second measuring part
203: third measuring part
204: fourth measuring part
205: fifth measuring part
206: sixth measuring part
207: seventh measuring part
208: eighth measuring part
209: ninth measuring part
L1: supply line
L2: discharge line

## Claims

1. A compression system comprising:
a supply line to which raw material gas is supplied;
a first compression part that compresses the raw material gas flowing through the supply line;
an impurity removal part that removes an impurity from the raw material gas compressed by the first compression part;
a second compression part that further compresses the raw material gas that has passed through the impurity removal part;
a discharge line that guides the raw material gas compressed by the second compression part to the outside;
an upstream side shutoff valve and a downstream side shutoff valve that are respectively provided at a front stage and a rear stage of the impurity removal part to sandwich the impurity removal part therebetween, and of which a flow rate of at least one is adjustable;
a gas addition line capable of guiding compressed gas between the downstream side shutoff valve and the second compression part; and
an open/close valve provided in the discharge line.

2. The compression system according to Claim 1, further comprising:
an upstream side bypass line and a downstream side bypass line that respectively bypass the upstream side shutoff valve and the downstream side shutoff valve; and
a flow regulation valve provided in at least one of the upstream side bypass line and the downstream side bypass line.

3. The compression system according to Claim 1 or 2, further comprising:
a pressurizing line capable of guiding the compressed gas to an upstream side of the first compression part in the supply line.

4. The compression system according to Claim 1 or 2, further comprising:
a first recycling line that connects a downstream side and an upstream side of the first compression part;
a first expansion valve provided on the first recycling line;
a second recycling line that connects a downstream side and an upstream side of the second compression part; and
a second expansion valve provided on the second recycling line.

5. The compression system according to Claim 1 or 2, further comprising:
a fluctuation rate acquisition part that is provided between the impurity removal part and the downstream side shutoff valve, acquires a pressure fluctuation rate of the raw material gas, and is capable of adjusting an opening degree of at least one of the upstream side shutoff valve and the downstream side shutoff valve based on the pressure fluctuation rate.

6. A method for starting up the compression system according to Claim 1 or 2, the method comprising:
a step of closing the upstream side shutoff valve and the downstream side shutoff valve;
a step of causing the raw material gas to flow through the supply line;
a step of starting up the first compression part;
a step of starting up the second compression part;
a step of guiding the raw material gas to the impurity removal part in a state where a predetermined pressure fluctuation speed is maintained by adjusting an opening degree of the one shutoff valve whose flow rate is adjustable in a direction in which the opening degree increases while opening the upstream side shutoff valve;
a step of opening the downstream side shutoff valve when a pressure of the impurity removal part exceeds a predetermined reference value; and
a step of opening the open/close valve provided in the discharge line.

7. A method for stopping the compression system according to Claim 1 or 2, the method comprising:
a step of closing the upstream side shutoff valve, the downstream side shutoff valve, and the open/close valve; and
a step of stopping the first compression part and the second compression part.
